# FASCICULE DE BREVET EUROPEEN

(11) **EP 0 418 183 B1**
(45) Date de publication et mention de la délivrance du brevet: **21.06.1995**
(21) Numéro de dépôt: 90470048.1
(22) Date de dépôt: 07.09.1990
(51) Int. Cl.: F16K 3/316, B29C 65/00, B29C 70/00

(54) **Dispositif de fixation de pastilles de frottement sur un opercule de vanne**
Vorrichtung zur Befestigung von Gleitscheiben an einem Absperrschieber
Device for the fixation of friction pads for a gate valve

(30) Priorité: 12.09.1989 FR 8912077
(43) Date de publication de la demande: 20.03.1991
(73) Titulaire: PONT-A-MOUSSON S.A., 54000 Nancy (FR)
(72) Inventeur: Royer, Jean-Claude, F-54700 Lesmenils (FR); Hanicot, Jean-Pierre, F-54550 Pont Saint Vincent (FR)
(74) Mandataire: Puit, Thierry

(56) Documents cités:
- EP-A- 286 249
- EP-A- 0 116 805
- EP-A- 0 129 826
- EP-A- 0 171 693
- US-A- 4 124 676
- PATENT ABSTRACTS OF JAPAN vol. 9, no. 87 (M-372)(1810) 17 avril 85, & JP-A-59 215817 (KIKUO KAMASAKI) 05 décembre 84

## Description

La présente invention concerne un opercule pour vanne à opercule, plus précisément un opercule muni de pastilles de frottement en matière plastique qui permettent de diminuer le coefficient de frottement de l'opercule sur le corps de la vanne, et son mode de fabrication. De tels opercules sont généralement constitués d'une âme métallique, par exemple en fonte, sur laquelle on vient surmouler un élastomère.

Le coefficient de frottement entre les élastomères et le matériau constitutif du corps de la vanne, en général de la fonte revêtue d'une résine époxydique, est relativement élevé, ce qui entraîne, après un certain nombre de cycles d'ouverture-fermeture de la vanne, une usure importante de l'élastomère au niveau des surfaces de guidage de l'opercule en contact avec le corps de la vanne ainsi que des arrachements du matériau constitutif du corps de la vanne.

C'est pour cette raison que l'on a vu apparaître des pastilles de frottement collées sur l'opercule au niveau des surfaces de guidage en contact avec le corps de la vanne. Ces pastilles sont en un matériau plastique ayant un meilleur coefficient de frottement avec le matériau constitutif du corps de la vanne que celui des élastomères.

Ainsi, le document EP-A-129 826 décrit une vanne dont l'opercule est surmoulé d'un matériau protecteur et comporte des pièces de frottement en matière plastique, lesdites pièces de frottement étant placées dans des logements ménagés dans l'âme de l'opercule et situées en regard de surfaces de guidage en contact avec le corps de vanne. Le maintien en place des pièces de frottement sur l'âme de l'opercule est simplement assuré par la coopération de saillies prévues sur les pièces avec des rainures ménagées dans l'opercule et par collage de la pièce sur ce dernier.

Deux techniques sont utilisées pour la fixation des pastilles sur l'opercule.

La première consiste à coller les pastilles à l'endroit désiré sur l'âme métallique de l'opercule avant de la revêtir d'élastomère, et la seconde consiste à coller les pastilles sur l'âme après surmoulage par de l'élastomère.

Ce mode de fixation des pastilles, par collage, ne donne pas satisfaction car les opercules subissent des contraintes mécaniques très élevées incompatibles avec la tenue des colles, d'autant plus qu'ils évoluent dans un milieu liquide qui peut être chaud ou agressif.

Un autre mode de fixation des pastilles, sans collage, consiste à utiliser l'élastomère comme intermédiaire entre lesdites pastilles et l'âme de l'opercule.

Dans ce cas, les pastilles présentent sur leur face en regard avec l'âme de l'opercule une pluralité de cavités en forme de queue d'aronde qui seront remplies par l'élastomère, provoquant ainsi une liaison mécanique entre lesdites pastilles et l'élastomère solidaire de l'âme de l'opercule.

L'inconvénient de ce mode de fixation réside dans le fait que pour réaliser un opercule , il faut placer dans le moule d'injection de l'élastomère une âme ainsi que les pastilles en laissant un espace libre entre lesdites pastilles et l'âme de l'opercule pour permettre à l'élastomère de passer.

Or l'élastomère est injecté à une pression supérieure à 100 bars , pression qui peut provoquer un déplacement des pastilles dans le moule, ce qui entraîne la présence d'élastomère au dessus des pastilles. Dans ce cas, les pastilles ne remplissent plus leur rôle puisque le frottement aura lieu sur l'élastomère.

La présente invention concerne deux alternatives de réalisation d'un dispositif de fixation des pastilles un opercule de vanne à opercule permettant de s'affranchir de ces inconvénients.

Les deux modes de réalisation de l'objet selon l'invention sont définis par les caractéristiques des revendications indépendantes 1 et 2. Des modes particuliers sont définis par les revendications dépendantes.
Les caractéristiques et avantages apparaîtront dans la description qui va suivre, donnée uniquement à titre d'exemple, faite en référence aux dessins annexés, dans lesquels :
- la Fig. 1 est une vue de l'âme de l'opercule selon l'invention ;
- la Fig. 2 est une demi coupe 2-2 de la Fig 1 ;
- la Fig. 3 est une vue en coupe de détail des pastilles de frottement de l'opercule selon l'invention avant fermeture du moule d'injection de l'élastomère ;
- la Fig 4 est une vue en coupe des pastilles de l'opercule selon l'invention après fermeture du moule d'injection de l'élastomère ;
- la Fig. 5 est une vue de détail en coupe de l'opercule selon l'invention ;
- la Fig. 6 est une vue en coupe d'une variante de réalisation des pastilles de l'opercule selon l'invention.

L'opercule selon l'invention est constitué d'une âme 1, par exemple en fonte, revêtue d'un surmoulage élastomère 2.

L'âme 1 de l'opercule est munie d'au moins un logement 3, ménagé au niveau des faces de guidage de l'opercule.

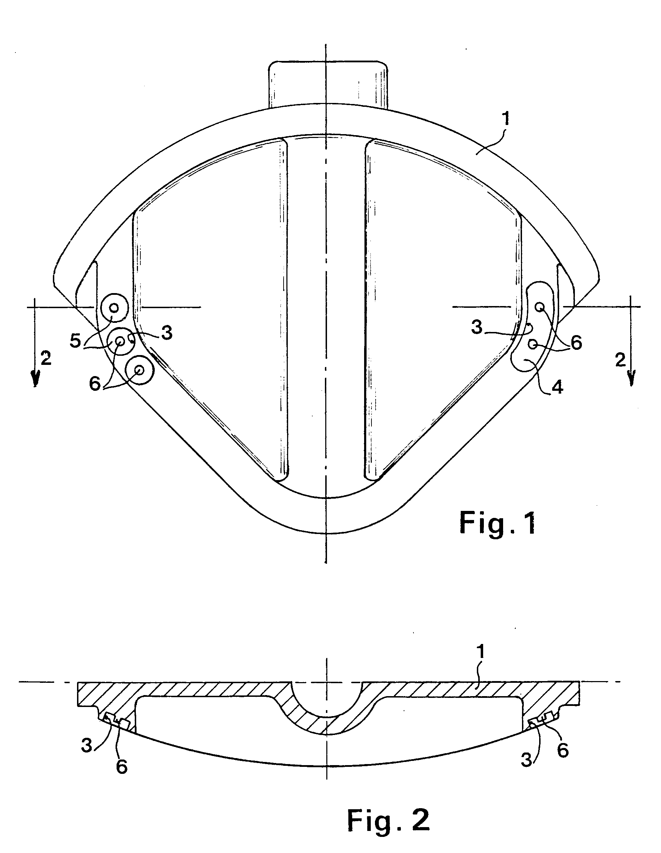

Dans l'exemple de réalisation représenté Fig. 1, l'âme 1 de l'opercule présente d'un côté un seul logement 4 de forme allongée et, de l'autre côté, trois logements 5 de forme circulaire.

Chaque logement 3 est muni d'au moins un téton saillant 6.

Dans L'exemple de réalisation, le logement 4 présente deux tétons 6,légèrement coniques, ménagés en saillie dans le fond du logement 4, également répartis dans le logement, d'axe perpendiculaire au fond dudit logement et chaque logement 5 présente un téton saillant 6 ménagé dans le fond du logement en son centre.

Des pastilles 7 sont positionnées et maintenues en place dans les logements 3 de l'âme 1 de l'opercule. Les pastilles 7 sont munies de doigts déformables 8 permettant un positionnement parfait desdites pastilles sur l'âme de l'opercule et un accrochage mécanique desdites pastilles sur l'opercule.

Leur face interne 9 en regard avec l'âme 1 de l'opercule est munie d'au moins un trou 10, d'axe perpendiculaire à ladite face 9, de diamètre légèrement inférieure à celui des tétons 6 des logements 3 de l'âme 1 de l'opercule.

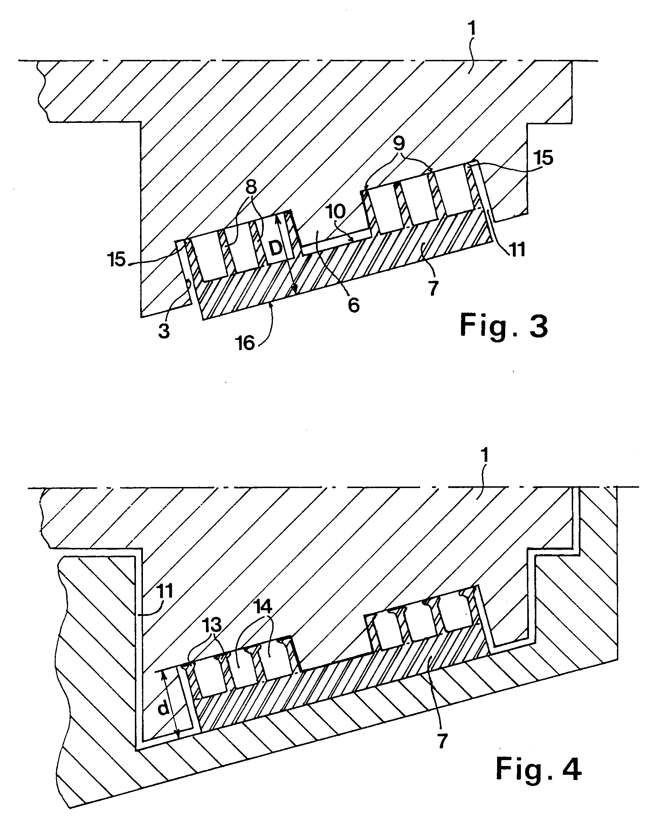

Dans l'exemple de réalisation représenté fig. 3 à 5, la face interne 9 des pastilles est munie d'une pluralité de doigts 8 perpendiculaires à la face interne 9, coopérant avec le fond des logements 3, et d'un trou 10, cylindrique, d'axe perpendiculaire à ladite face.

Les dimensions transversale et longitudinale des pastilles 7 sont inférieures à celle des logements 3 de l'âme de l'opercule afin de conserver un espace libre 11 entre le bord des pastilles 7 et celui des logements 3. Dans le cas de pastilles cylindriques, le diamètre des pastilles est inférieur au diamètre des logements 3.

La hauteur totale D des pastilles est supérieure à la distance d égale à la profondeur des logements 3 ajouté à l'épaisseur de l'élastomère qui va être surmoulé, ou, plus simplement égale à la cote entre le fond des logements 3 et la paroi interne du moule d'injection de l'élastomère lorsque celui-ci est fermé sur l'âme 1 de l'opercule.

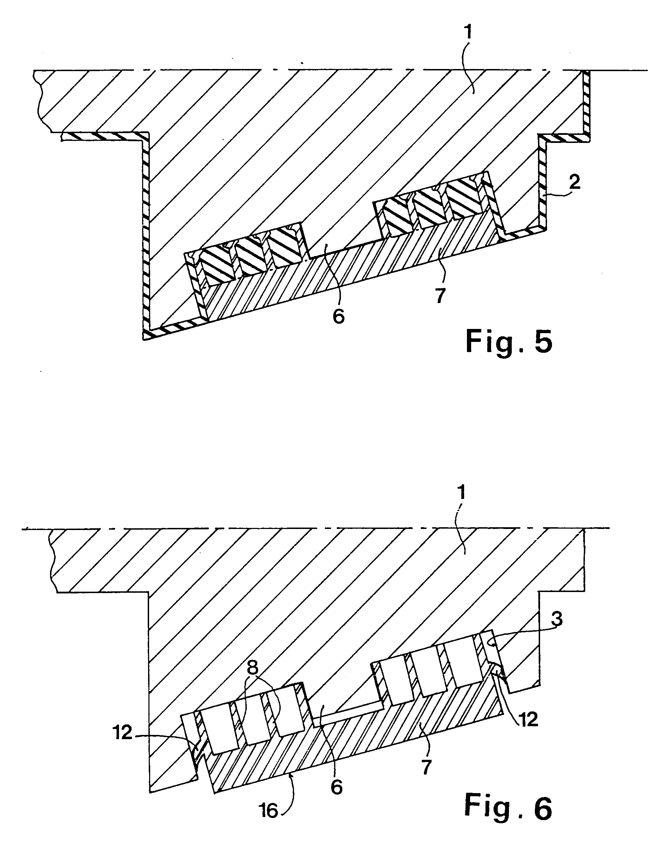

Dans la variante de réalisation représentée Fig. 6, les pastilles sont munies de doigts 12 faisant saillie latéralement, coopérant avec les faces latérales des logements 3.

Le mode de fabrication de l'opercule est le suivant. L'âme 1 munie des logements 3 obtenus directement en fonderie, donc sans usinage, est grenaillée et nettoyée.

Les pastilles 7 sont positionnées dans les logements 3 prévus à cet effet. La dimension des trous 10 étant légèrement inférieure à celle des tétons 6 d'une part, associé à la conicité des tétons 6 d'autre part permet un maintien en place des pastilles 7 dans les logements 3. Dans le cas où on utilise des pastilles telles que représentées fig.6, les doigts latéraux 12 permettent de parfaire le positionnement et le maintien en place desdites pastilles.

L'ensemble âme 1 - pastilles 7 est placé dans le moule d'injection de l'élastomère.

Lors de la fermeture du moule, étant donné que la hauteur D des pastilles est supérieure à la distance d entre le fond des logements 3 et la paroi interne du moule, lesdites pastilles s'écrasent dans les logements. L'extrémité libre 15 des doigts 8 en contact avec le fond des logements 3 se déforme en bourrelet 13, laissant ainsi apparaître des cavités 14.

Ainsi pendant cette opération, la face externe 16 des pastilles 7, en contact avec le moule en épouse parfaitement la forme et les différences d'épaisseur de l'âme de l'opercule dues aux tolérances de fonderie sont rattrapées.

L'élastomère est alors injecté dans le moule. Celui-ci pénètre dans les cavités 14 par l'espace libre 11 et on réalise ainsi un accrochage mécanique des pastilles sur l'opercule par l'intermédiaire de l'élastomère. Si nécessaire, les pastilles 7 sont munies de conduits (non représentés) d'évacuation de l'air lors de la phase d'injection de l'élastomère.

Une variante de réalisation non représentée consiste à ménager au moins un trou dans le fond des logements 3 de l'âme 1 de l'opercule et au moins un téton saillant sur la face interne des pastilles 7, de forme conjuguée à celle des trous des logements 3.

Les avantages d'un tel opercule sont les suivants :
- l'âme de l'opercule ne nécessite aucun usinage particulier ;
- les pastilles de frottement sont accrochées mécaniquement à l'opercule et non pas par collage ;
- les différences d'épaisseurs de l'âme de l'opercule dues aux tolérances de fonderie sont rattrapées ;
- l'élastomère ne peut pas recouvrir les pastilles de frottement ;
- les pastilles sont maintenues mécaniquement en place sur l'âme de l'opercule et ne risquent pas de se déplacer lors de l'injection de l'élastomère.

## Revendications

1. Dispositif de fixation d'une pastille de frottement (7) en matière plastique sur l'âme d'un opercule en fonte de vanne à opercule surmoulé d'un matériau protecteur en élastomère à l'intérieur d'un moule d'injection, dispositif dans lequel l'âme comprend au moins un logement (3) recevant ladite pastille et placé au niveau de surfaces de guidage en contact avec le corps de vanne, caractérisé en ce que la pastille de frottement est munie de doigts déformables (8) permettant son positionnement parfait sur l'âme (1) et son accrochage mécanique sur l'opercule, et d'un trou (10) de diamètre inférieur à celui d'un téton conique (6) s'élevant perpendiculairement au fond du logement (3) et destiné à s'engager dans ledit trou (10).

2. Dispositif de fixation d'une pastille de frottement (7) en matière plastique sur l'âme d'un opercule en fonte de vanne à opercule surmoulé d'un matériau protecteur en élastomère à l'intérieur d'un moule d'injection, dispositif dans lequel l'âme comprend au moins un logement (3) recevant ladite pastille et placé au niveau de surfaces de guidage en contact avec le corps de vanne, caractérisé en ce que la pastille de frottement est munie de doigts déformables (8) permettant son positionnement parfait sur l'âme (1) et son accrochage mécanique sur l'opercule, et en ce que le fond de chaque logement est muni d'un trou de diamètre inférieur à celui d'un téton conique ménagé sur la face interne des pastilles et destiné à s'engager dans ledit trou.

3. Dispositif selon l'une des revendications 1 ou 2, caractérisé en ce que le fond de chaque logement (3) est en contact avec les doigts déformables (8) ménagés sur la pastille (7), perpendiculairement à sa face interne (9) dirigée vers l'âme (1) de l'opercule.

4. Dispositif selon l'une des revendications 1 à 3, caractérise en ce que la hauteur totale D des pastilles (7) est supérieure à la distance d entre le fond des logements (3) et la face interne du moule d'injection de l'élastomère lorsque celui-ci est fermé sur l'âme de l'opercule.

5. Dispositif suivant l'une des revendications 1 ou 2, caractérisé en ce que les pastilles (7) présentent des conduits d'évacuation de l'air.

## Claims

1. Means for fixing a friction patch (7) of plastics material on the core of a cast iron gate valve shutter disk onto which a protective elastomer material is moulded within an injection mould, means in which the core comprises at least one seating (3) receiving the said patch and located on the guide surfaces in contact with the body of the valve, characterised in that the friction patch is provided with deformable fingers (8) which enable it to be positioned perfectly on the core (1) and attached mechanically to the disk, and a hole (10) having a diameter less than that of a tapering positioning stud (6) which rises perpendicularly from the base of the seating (3) and is designed to engage the said hole (10).

2. Means for attaching a friction patch (7) of plastics material to the core of a cast iron gate valve shutter disk onto which protective elastomer material is moulded within an injection mould, means in which the core comprises at least one seating (3) receiving the said patch and located on the guide surfaces in contact with the body of the valve, characterised in that the friction patch is provided with deformable fingers (8) which enable it to be positioned perfectly on the core (1) and attached mechanically to the disk, and in that the base of each seating is equipped with a hole having a diameter less than that of a tapering positioning stud placed on the inside surface of the patches and designed to engage in the said hole.

3. Means according to either of claims 1 or 2, characterised in that the base of each seating (3) is in contact with the deformable fingers (8) provided on the patch (7) perpendicular to its inside face (9) facing the core (1) of the disk.

4. Means according to any one of claims 1 to 3, characterised in that the total height D of the patches (7) is greater than the distance d between the bases of the seatings (3) and the inside face of the elastomer injection mould when the latter closes over the core of the disk.

5. Means according to either of claims 1 or 2, characterised in that the patches (7) have ducts for the evacuation of air.

## Patentansprüche

1. Vorrichtung zur Befestigung einer Gleitscheibe (7) aus Kunststoff an dem Kern eines gußeisernen Schiebers für Schiebeventile, der in einer Einspritzgußform mit einem Schutzmaterial aus Elastomer überformt wird, wobei der Kern bei dieser Vorrichtung mindestens eine Aufnahme (3) aufweist, die die genannte Gleitscheibe aufnimmt und im Bereich der mit dem Ventilkörper in Kontakt befindlichen Führungsflächen angeordnet ist.
dadurch gekennzeichnet, daß die Gleitscheibe (7) mit verformbaren Fingern (8), die ihr perfektes Positionieren an dem Kern (1) und ihren mechanischen Halt an dem Schieber ermöglichen, und mit einer Bohrung (10), deren Durchmesser kleiner ist als der eines senkrecht zum Boden der Aufnahme (3) verlaufenden konischen Ansatzes (6), der dazu bestimmt ist, in die genannte Bohrung (10) einzugreifen, versehen ist.

2. Vorrichtung zur Befestigung einer Gleitscheibe (7) aus Kunststoff an dem Kern eines gußeisernen Schiebers für Schiebeventile, der in einer Einspritzgußform mit einem Schutzmaterial aus Elastomer überformt wird, wobei der Kern bei dieser Vorrichtung mindestens eine Aufnahme (3) aufweist, die die genannte Gleitscheibe aufnimmt und im Bereich der mit dem Ventilkörper in Kontakt befindlichen Führungsflachen angeordnet ist,
dadurch gekennzeichnet, daß die Gleitscheibe (7) mit verformbaren Fingern (8) versehen ist, die ihr perfektes Positionieren an dem Kern (1) und ihren mechanischen Halt an dem Schieber ermöglichen, und daß der Boden jeder Aufnahme mit einer Bohrung versehen ist, deren Durchmesser kleiner ist als der eines konischen Ansatzes, der an der Innenseite der Gleitscheiben ausgeführt ist und dazu bestimmt ist, in die genannte Bohrung einzugreifen.

3. Vorrichtung nach einem der Ansprüche 1 oder 2,
dadurch gekennzeichnet, daß der Boden jeder Aufnahme (3) sich in Berührung mit den verformbaren Fingern (8) befindet, die an der Gleitscheibe (7) senkrecht zu deren Innenseite (9) vorgesehen sind, die dem Schieberkern (1) zugewandt ist.

4. Vorrichtung nach einem der Ansprüche 1 bis 3,
dadurch gekennzeichnet, daß die Gesamthöhe D der Gleitscheiben (7) größer ist als der Abstand d zwischen dem Boden der Aufnahmen (3) und der Innenseite der Elastomer-Einspritzform, wenn diese um den Schieberkern geschlossen ist.

5. Vorrichtung nach einem der Ansprüche 1 oder 2,
dadurch gekennzeichnet, daß die Gleitscheiben (7) Luftauslaßleitungen aufweisen.
